# EUROPÄISCHE PATENTSCHRIFT

(11) **EP 1 199 939 B1**
(45) Veröffentlichungstag und Bekanntmachung des Hinweises auf die Patenterteilung: **24.11.2004**
(21) Anmeldenummer: 00953152.6
(22) Anmeldetag: 03.08.2000
(51) Int. Cl.: A21C 11/16, A21C 3/08

(54) **DÜSENANORDNUNG, DÜSENTRÄGER UND VORRICHTUNG ZUM EXTRUDIEREN TEIGIGER MASSEN**
NOZZLE ARRANGEMENT, NOZZLE HOLDER AND DEVICE FOR EXTRUDING MATERIALS IN DOUGH FORM
ENSEMBLE FILIERE, PORTE-FILIERE ET DISPOSITIF POUR EXTRUDER DES MATIERES SOUS FORME DE PATE

(30) Priorität: 05.08.1999 DE 19936815
(43) Veröffentlichungstag der Anmeldung: 02.05.2002
(73) Patentinhaber: Hosokawa Bepex GmbH, 74211 Leingarten (DE)
(72) Erfinder: HORNA, Marc, D-74360 Ilsfeld (DE); ALTVATER, Frank, D-74074 Heilbronn (DE)
(74) Vertreter: Goetz, Rupert, Dipl.-Ing.
(86) Internationale Anmeldenummer: PCT/EP2000/007552
(87) Internationale Veröffentlichungsnummer: WO 2001/010225

(56) Entgegenhaltungen:
- EP-A- 0 287 209
- EP-A- 0 434 983
- WO-A-93/03909
- US-A- 2 532 131
- US-A- 4 288 463
- US-A- 4 900 572
- US-A- 5 620 713
- US-A- 5 834 040

## Beschreibung

Die Erfindung betrifft eine Düsenanordnung gemäß dem Oberbegriff des Anspruchs 1 und einen Düsenträger sowie eine Vorrichtung zum Extrudieren teigiger Massen mit einer derartigen Düsenanordnung.

Backwaren, Teige und Süßwaren werden oftmals extrudiert, indem unter Druck gesetzte Masse durch eine Düsenanordnung zu einem Strang ausgepreßt wird. Der Strang kann als solcher durch ein Transportband abgeführt oder in kurze Abschnitte geteilt werden. Die äußere Gestalt des Strangs, insbesondere seine Umfangsgestalt, ist von der Düsenanordnung abhängig.

Aus dem Dokument US-A- 5,637,341 ist eine Einrichtung zum Herstellen geflochtener Teigwaren bekannt, die drei in einer Reihe angeordnete Antriebsscheiben aufweist, denen vier Düsenplatten zugeordnet sind. Die Düsenplatten werden abwechselnd zwischen den Antriebsscheiben übergeben und flechten dabei die austretenden Teigstränge. Während eine Düsenplatte von einer Antriebsscheibe bewegt wird, wird sie um deren Achse gedreht. Mit einer derartigen Einrichtung können keine gefüllten Teigwaren hergestellt werden.

Aus EP-A-0 704 158 ist eine Düsenanordnung bekannt, bei der eine ortsfeste innere Düse von einer mittleren und einer äußeren Düse umgeben ist, die in einem Rotor ausgebildet sind. Alle Düsen sind koaxial angeordnet. Mit einer derartigen Düsenanordnung können Teigwaren mit einem Strang hergestellt werden, der eine Füllung und zwei umhüllende Teigmassen aufweist.

Aus EP-A-0 168 255 und EP-A-0 177 175 sind Vorrichtungen zum Co-Extrudieren zweier Massen bekannt, die eine innere Masse durch eine Düse und eine äußere Masse mit darin enthaltenen körnigen Partikeln durch einen die Düse umgebenden Trichter extrudieren, wobei die Massen zu einem Strang verbunden werden. Der Trichter weist an seiner Mündung scharfe Kanten auf, um zu erreichen, daß die körnigen Partikel in der äußeren Masse an die Oberfläche gelangen. Die Mündung des Trichters kann gezahnt ausgebildet sein, damit die Partikel auch aus der Oberfläche hervorstehen. Der Verbundstrang wird von einem Tranportband abgeführt. Hierdurch läßt sich eine Backware aus zwei Massen herstellen, die geradlinige längliche Form hat und an der Oberfläche körnige Partikel aufweist.

Aus EP-A-0 202 143 A2 ist ein Dreifach-Extruder bekannt, durch den eine innere Masse durch eine erste äußere Masse, und diese durch eine zweite äußere Masse ummantelt werden kann. Eine innere Düse wird durch einen mittleren Zuführkanal mit der inneren Masse gespeist. Eine äußere Düse umgibt die innere Düse und wird durch einen seitlichen Zuführkanal mit der äußeren Masse gespeist. Ein Trichter umgibt die äußere Düse. Die zweite äußere Masse wird durch den Trichter zugeführt. Die äußere Düse und der Trichter bilden je einen Ringraum um die innere Düse. Diese Ringräume weisen im Längsschnitt eckige Form auf. Mit einem solchen Dreifach-Extruder läßt sich eine ebenfalls längliche äußerlich geradlinige Backware herstellen.

US-A-5,120,554 beschreibt einen freistehenden Düsenkopf zum Extrudieren einer Teigmasse. Der Düsenkopf hat am Umfang mehrere Düsenanordnungen. Die Düsenanordnungen sind von je einer Zweifachdüse gebildet, um gefüllte Backwaren herzustellen. Diese Zweifachdüsen haben je eine innere Düse, die durch einen einzelnen Zuführkanal gespeist wird, und je eine äußere Düse. Die äußeren Düsen werden über eine gemeinsame zylinderförmige Zuführkammer durch seitliche Kanäle gespeist. Der Düsenkopf ermöglicht das gleichzeitige Extrudieren mehrerer gefüllter gerader Stränge.

Aus US-A-5,518,749 und WO 97/25881 sind ein Verfahren und eine Vorrichtung zum Herstellen verdrillter Getreideprodukte bekannt. Ein Rotor, der sich durch eine Kammer erstreckt und in einer Öffnung der Kammer mündet, bildet eine innere Düse, durch die eine innere Masse zuführbar ist. Durch einen Seitenkanal ist eine zweite Masse in die Kammer zuführbar. Zwischen der Öffnung der Kammer und dem Rotor besteht ein Ringspalt, durch den die zweite Masse austreten kann. Der Ringspalt entspricht einer äußeren Düse. Dreht sich der Rotor, bzw. die innere Düse, so entsteht ein Erzeugnis mit einer verdrillten äußeren Masseschicht und einer Füllung. Dabei ist die Verdrillung der äußeren Masseschicht jedoch stark von den Eigenschaften der äußeren Masse, wie beispielsweise Fließverhalten und Zähigkeit, abhängig. Die extrudierten Getreideprodukte weisen daher nicht ausreichend gleichmäßige Form auf.

Aus der WO 93/03909, die die Basis für den Oberbegriff des Anspruchs 1 bildet, ist eine um eine gemeinsame Drehachse drehbare Düsenanordnung mit zwei inneren Düsen zum Extrudieren einer inneren Masse und zwei äußeren Düsen zum Extrudieren einer äußeren Masse bekannt. Jede innere Düse ist von einer äußeren Düse umgeben, wobei jedoch die Mündungen der äußeren Düsen in Strömungsrichtung der zu extrudierenden Masse vor den Mündungen der inneren Düsen angeordnet sind.

Die EP 0 434 983 A1 offenbart eine Extrusionsanordnung, bei der die Mündung einer feststehenden äußeren Düse in Strömungsrichtung der zu extrudierenden Masse hinter der Mündung einer inneren Düse angeordnet ist. Diese bekannte Extrusionsvorrichtung mit ortsfest angebrachten Düsen ist jedoch nicht zur Herstellung gewendelter Teigwaren geeignet.

Aufgabe der Erfindung ist es, eine Düsenanordnung, einen Düsenträger und eine Vorrichtung zum Extrudieren teigiger Massen vorzusehen, mit der gewendelte Teigwaren mit sehr hoher Formund Gewichtsgenauigkeit herstellbar sind, bei denen mehrere gewendelte Stränge einzeln gefüllt sind und eine gute Ankopplung der äußeren Masse auf der inneren Masse erzielt werden kann.

Die Aufgabe ist erfindungsgemäß durch eine Düsenanordnung gemäß Anspruch 1 gelöst. Mit einer solchen Düsenanordnung ist die Verdrillung der einzelnen Stränge durch Verändern der Drehgeschwindigkeit genau einstellbar.

Durch die vorteilhafte Weiterbildung gemäß Anspruch 2 ist die Ankopplung der äußeren Masse auf der inneren Masse weiter verbessert.

Gemäß Anspruch 3 ist die Düsenanordnung in kompakter Weise in einem Düsenträger aufgenommen. Dieser kann durch die im Anspruch 4 genannten konstruktiven Merkmale weitergebildet sein. Mit einem derartigen Düsenträger lassen sich gewendelte Backwaren herstellen, deren einzelne Stränge je gleiche Füllungen und gleiche Umhüllungen aufweisen.

Gemäß den Ansprüchen 5 und 6 ist die Düsenanordnung in einem Düsenträger derart aufgenommen, daß die mit einem derartigen Düsenträger hergestellten Backwaren zwei verschiedenartige Umhüllungen und eine Füllung oder eine Umhüllung und zwei verschiedenartige Füllungen aufweisen. Ein solcher Düsenträger kann gemäß Anspruch 7 vorteilhaft weitergebildet sein.

Gemäß Anspruch 8 ist die Düsenanordnung in einem Düsenträger derart aufgenommen, daß die mit einem derartigen Düsenträger hergestellten Backwaren zwei verschiedenartige Umhüllungen und zwei verschiedenartige Füllungen aufweisen. Ein solcher Düsenträger kann gemäß Anspruch 9 vorteilhaft weitergebildet sein.

Eine vorteilhafte Weiterbildung der Düsenträger sieht gemäß Anspruch 10 vor, daß sich der Düsenträger um die Mittelachse der Achsen der Düsen dreht, wodurch eine um ihre Mittelachse gewendelte Backware entsteht.

Die in den Düsenträgern ausgebildeten Ringräume sind gemäß Anspruch 11 im Längsschnitt abschnittsweise kreis- oder ellipsenförmig ausgebildet. Dadurch ist vermieden, daß die in den Ringraum oder aus ihm heraus oder innerhalb des Ringraumes strömende Masse über scharfe Kanten strömt, die Turbulenzen in der Masse erzeugen würden. Ferner wirken die Ringräume als Druckausgleichsräume, so daß es möglich ist, einen gleichmäßigen Massestrom aus den Mündungen der äußeren Düsen zu erzeugen und dadurch Backwaren mit genau gleicher äußerer Gestalt und gleichem Gewicht zu gestalten.

Durch die Weiterbildungen gemäß den Ansprüchen 12 und 13 ist das Förden und Verteilen der teigigen Masse in den Ringkanälen verbessert.

Zum Antreiben des genannten Düsenträgers in einer Vorrichtung ist gemäß Anspruch 14 besonders ein Zugmittelgetriebe geeignet, insbesondere ein Zahnriementrieb, oder ein Zahnradgetriebe mit sich kreuzenden Achsen, wobei in einer besonders bevorzugten Gestaltung gemäß Anspruch 15 mehrere Düsenträger gleichzeitig antreibbar sind.

Eine bevorzugte Ausführungsform der Erfindung sieht gemäß Anspruch 16 vor, daß der/die Düsenträger in einem Winkel α von etwa 25° zur Vertikalen geneigt angeordnet ist/sind. Durch den geneigten Düsenträger treffen die austretenden Massen auf einer Unterlage, beispielsweise einem Transportband, schräg auf und werden dadurch beim Wegbewegen weniger verformt, als dies der Fall wäre, wenn die Massen senkrecht austreten würden.

Ausführungsbeispiele erfindungsgemäßer Düsen, Düsenträger und Vorrichtungen zum Extrudieren teigiger Massen werden im folgenden anhand schematischer Zeichnungen näher erläutert. Es zeigt:
- Fig.1: ein erstes Ausführungsbeispiel eines erfindungsgemäßen Düsenträgers im Längsschnitt,
- Fig.2: ein Beispiel einer mit dem in Fig.1 dargestellten Düsenträger erzeugten Backware in Seitenansicht,
- Fig.3: den Querschnitt III-III in Fig.2,
- Fig.4: ein zweites Ausführungsbeispiel eines erfindungsgemäßen Düsenträgers und Teile der ihn umgebenden Vorrichtung in einem Längsschnitt,
- Fig.5: ein Beispiel einer mit dem in Fig.4 dargestellten Düsenträger hergestellten Backware in Seitenansicht,
- Fig.6: den Querschnitt VI-VI in Fig.5,
- Fig.7: ein drittes Ausführungsbeispiel eines erfindungsgemäßen Düsenträgers in einem Längsschnitt,
- Fig.8: ein Beispiel einer mit dem in Fig.7 dargestellten Düsenträger hergestellten Backware in Seitenansicht,
- Fig.9: den in Fig.8 mit IX-IX bezeichneten Querschnitt,
- Fig.10: einen erfindungsgemäßen Ringeinsatz eines in den Fig. 1, 4 und 7 dargestellten Düsenträgers in geschnittener Vorderansicht,
- Fig.11: den Schnitt XI-XI in Fig.10,
- Fig.12: die Ansicht XII-XII in Fig.10,
- Fig.13: einen erfindungsgemäßen Rotor des in Fig.4 dargestellten Düsenträgers in Seitenansicht,
- Fig.14: die Ansicht XIV-XIV in Fig. 13,
- Fig.15: einen erfindungsgemäßen Rotor des in Fig.7 dargestellten Düsenträgers in einer Seitenansicht,
- Fig.16: die in Fig.15 mit XVI-XVI bezeichnete Ansicht,
- Fig.17: ein viertes Ausführungsbeispiel eines erfindungsgemäßen Düsenträgers im Längsschnitt,
- Fig.18: ein erstes Ausführungsbeispiel einer erfindungsgemäßen Vorrichtung zum Extrudieren teigiger Massen mit zwei in Fig.4 dargestellten Düsenanordnungen in einem Längsschnitt,
- Fig.19: ein zweites Ausführungsbeispiel einer erfindungsgemäßen Vorrichtung zum Extrudieren teigiger Massen mit fünf Düsenanordnungen in einer Ansicht von unten,
- Fig.20: ein fünftes Ausführungsbeispiel eines erfindungsgemäßen Düsenträgers im Längsschnitt,
- Fig.21: den Schnitt XXI-XXI in Fig. 20,
- Fig.22: ein Beispiel einer mit dem in Fig.20 dargestellten Düsenträger hergestellten Backware im Querschnitt,
- Fig.23: die Seitenansicht XXIII-XXIII in Fig.22,
- Fig.24: einen erfindungsgemäßen Rotor des in Fig.20 dargestellten Düsenträgers in einer Seitenansicht, und
- Fig.25: die Ansicht XXV-XXV in Fig.24.

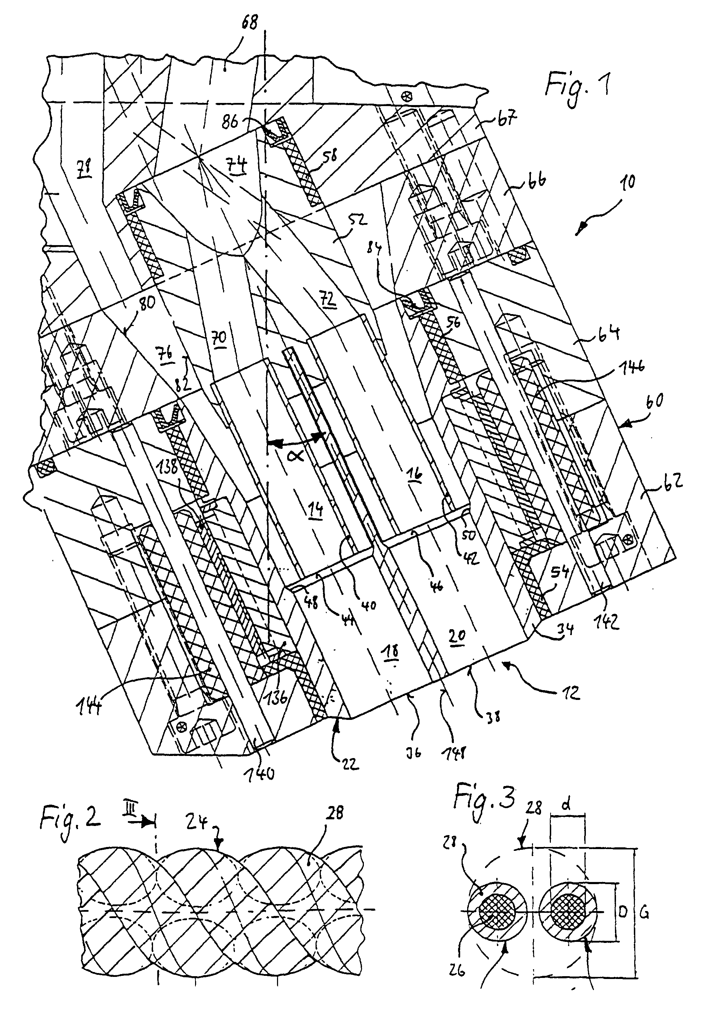

Die Fig. 1, 4, 7, 17 und 20 zeigen je einen Düsenträger 10 mit einer Düsenanordnung 12. Jede Düsenanordnung 12 weist zwei innere Düsen 14 und 16 sowie zwei äußere Düsen 18 und 20 auf. Die Düsen 14 bis 20 sind in einem Rotor 22 angeordnet, der drehbar gelagert ist. Beim Herstellen der Backware werden aus den Düsen 14 bis 20 jeweils Massen extrudiert. Dabei dreht sich der Rotor 22 und es entsteht eine Backware mit zwei gewendelten Strängen, die jeweils eine Füllung und eine Umhüllung aufweisen. Die in den Fig. 1, 4, 7 und 20 dargestellten Ausführungsbeispiele des Düsenträgers 10 ermöglichen je eine unterschiedliche Gestaltung der Backware, indem für die Füllung und die Umhüllung der einzelnen Stränge der Backware jeweils unterschiedliche Masse extrudierbar sind.

In Fig. 1 ist ein Ausführungsbeispiel der Düsenanordnung 10 dargestellt, mit der eine Backware 24 (Fig. 2 und 3) mit jeweils gleicher Füllung 26 und jeweils gleicher Umhüllung 28 der beiden Stränge 30 und 32 der Backware 24 möglich ist.

Hierzu sind die Düsen 18 und 20 als kreiszylinderförmige Öffnungen nebeneinander in einem Zylinder 34 ausgebildet. Die Düsen 18 und 20 weisen je eine Mündung 36 bzw. 38 auf und ihre Achsen erstrecken sich parallel.

In den Düsen 18 und 20 sind konzentrisch jeweils die Düse 14 bzw. 16 angeordnet, die durch jeweils ein Rohrstück 40 bzw. 42 radial begrenzt sind. Die Rührstücke 40 und 42 enden an je einer Mündung 44 bzw. 46 in den Düsen 18 und 20 derart, daß die Mündungen 44 und 46 gegen die Mündungen 36 bzw. 38 zurückversetzt sind.

Die Öffnungen der Düsen 18 und 20 verengen sich an je einem zur Achse der Düsen 18 und 20 abgeschrägten Absatz 48 bzw. 50 auf Höhe der Mündungen 44 und 46 in Richtung auf die Mündungen 36 bzw. 38. Beim Extrudieren strömen die inneren Massen an den Mündungen 44 und 46 mit den äußeren Massen in den äußeren Düsen 18 bzw. 20 zusammen. Dabei werden die inneren und äußeren Massen durch die verengten äußeren Düsen 18 und 20 zusammengedrängt und strömen in den Düsen 18 und 20 bis zu deren Mündungen 36 bzw. 38. Über diese Strecke verbinden sich die beiden Massen zu je einem Strang, wobei sich gleichzeitig eine homogene Strömung des Strangs bildet. Die aus den Mündungen 36 und 38 austretenden Stränge sind daher besonders formgenau und die Haftung zwischen den Massen ist besonders gut ausgeprägt.

Die beiden Rohrstücke 40 und 42 sind durch einen Einsatz 52 gehalten, der selbst im bezogen auf die Fig. 1 oberen Bereich des Zylinders 34 befestigt ist. Der Zylinder 34, der Einsatz 52 und die Rohrstücke 40 und 42 bilden zusammen den Rotor 22. Der Rotor 22 ist in drei Gleitlagern 54, 56 und 58 drehbar gelagert. Dabei liegt das Gleitlager 54 im Bereich der Mündungen 36 und 38 am Zylinder 34 an, während das Gleitlager 56 am entgegengesetzten Endbereich des Zylinders 34 angeordnet ist. Das Gleitlager 58 ist am den Rohrstücken 40 und 42 entgegengesetzten Endbereich des Einsatzes 52 angeordnet.

Der Rotor 22 ist teilweise von einem Stator 60 umgeben, der durch Gehäuseteile 62, 64, 66 und 67 gebildet ist. Die Gehäuseteile 62, 64, 66 und 67 sind aufeinanderfolgend angeordnet und durch gestrichelt dargestellte Schrauben miteinander verschraubt. Der Zylinder 34 mit den Mündungen 36 und 38 ragt aus dem Gehäuseteil 62 heraus. Das Gleitlager 54 stützt sich am Gehäuseteil 62 ab und hält dabei den Rotor 22 axial. Das Gleitlager 56 wirkt mit dem Gehäuseteil 64 und das Gleitlager 58 mit dem Gehäuseteil 67 zusammen.

Im Einsatz 52 sind anschließend an je ein Rohrstück 40 und 42 Verbindungskanäle 70 bzw. 72 ausgebildet, die sich innerhalb des Einsatzes 52 vereinigen und in einer Aushöhlung 74 enden. Die Aushöhlung 74 ist gegenüberliegend von einem Zuführkanal 68 angeordnet, der im Gehäuseteil 67 ausgebildet ist. Durch den Zuführkanal 68 ist die Masse der Füllung 26 zuführbar, die in die Aushöhlung 74 strömt, sich auf die Verbindungskanäle 70 und 72 aufteilt und durch die Rohrstücke 40 und 42 der inneren Düsen 14 bzw. 16 austritt. In der Aushöhlung 74 wird die Masse dabei gepuffert, wodurch Druckschwankungen im Strom der Masse verringert und ein gleichmässigerer Austritt der Masse durch die inneren Düsen 14 und 16 erzielt ist.

Um den Einsatz 52 herum ist zwischen den Gleitlagern 56 und 58 ein Ringraum 76 ausgebildet, der in Verbindung mit den beiden Öffnungen der äußeren Düsen 18 und 20 steht. Zum Ringraum 76 führt ein Zuführkanal 78, durch den die Masse der Umhüllung 28 unter Druck zuführbar ist. Der Ringraum 76 ist radial außenseitig durch das Gehäuseteil 66 begrenzt. Dabei ist die äußere Wand 80 des Ringraums 76 derart geneigt ausgebildet, daß ein bezogen auf die Fig. 1 nach unten sich verengender wirbelfreier Strom in die Düsen 18 und 20 gebildet ist. Die radial innere Wand 82 des Ringraums 76 ist im Querschnitt (nicht dargestellt) ein stark abgeflachtes Oval. Innerhalb dieser ovalförmigen Wand 82 des Einsatzes 52 erstrecken sich die beiden Verbindungskanäle 70 und 72, die jeweils im Querschnitt nahezu kreisförmig sind. Die ovale innere Wand 82 bildet eine Art Mitnehmer oder Paddel, durch den/das beim Drehen des Rotors 22 die äußere Masse im Ringraum 76 mitgedreht wird, so daß sie sich im gesamten Ringraum 76 gleichmäßig verteilt und dadurch eine gleichmäßige Verteilung der Masse in den äußeren Düsen 18 und 20 erzeugt ist.

Der Rotor 22 ist zum Stator 60 durch zwei Dichtungen 84 und 86 abgedichtet. Die Dichtung 84 ist bezogen auf Fig. 1 oberhalb des Gleitlagers 56 angeordnet und dichtet zwischen dem Zylinder 34 und dem Gehäuseteil 64 ab. Die Dichtung 86 ist oberhalb des Gleitlagers 58 angeordnet und dichtet zwischen dem Einsatz 52 und dem Gehäuseteil 67 ab. Dabei dient die Dichtung 86 sowohl zum Abdichten des inneren Zuführkanals 68, als auch zum Abdichten des Ringraums 76.

Das Zuführen der Massen erfolgt durch eine nicht dargestellte Einrichtung zum Mischen und Fördern der Masse. Die Massen können eine Mischung für Backwaren, wie z.B. Mehl, Stärke, Eier und Zucker, eine Mischung für Süßwaren, wie z.B. Zucker, Süßstoff, Kakao und Fette, oder eine Fruchtfüllung sein. Die Massen werden durch anschließendes Backen oder Auskühlen zu Nahrungsmitteln.

Die mit der in Fig. 1 dargestellten Düsenanordnung 10 hergestellte Backware 24 (Fig. 2 und 3) weist eine wendelförmige äußere Gestalt aus äußerer Masse 28 auf, wobei die einzelnen Stränge 30 und 32 mit innerer Masse 26 gefüllt sind. Der Durchmesser d der Füllung 26 aus innerer Masse beträgt beispielsweise 9mm, während der Äußendurchmesser D des einzelnen gewendelten Strangs 30 bzw. 32 beispielsweise 15mm beträgt. Es entsteht eine Backware 24 mit einem Gesamtdurchmesser G von etwa 33mm und einer Steigung s von etwa 20mm.

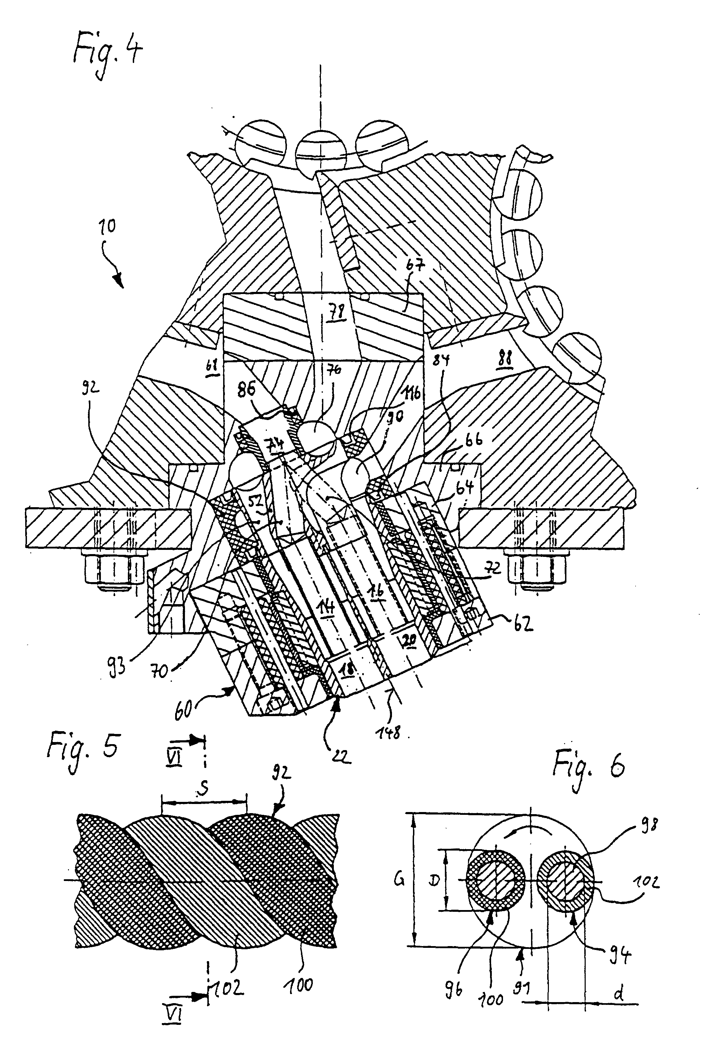

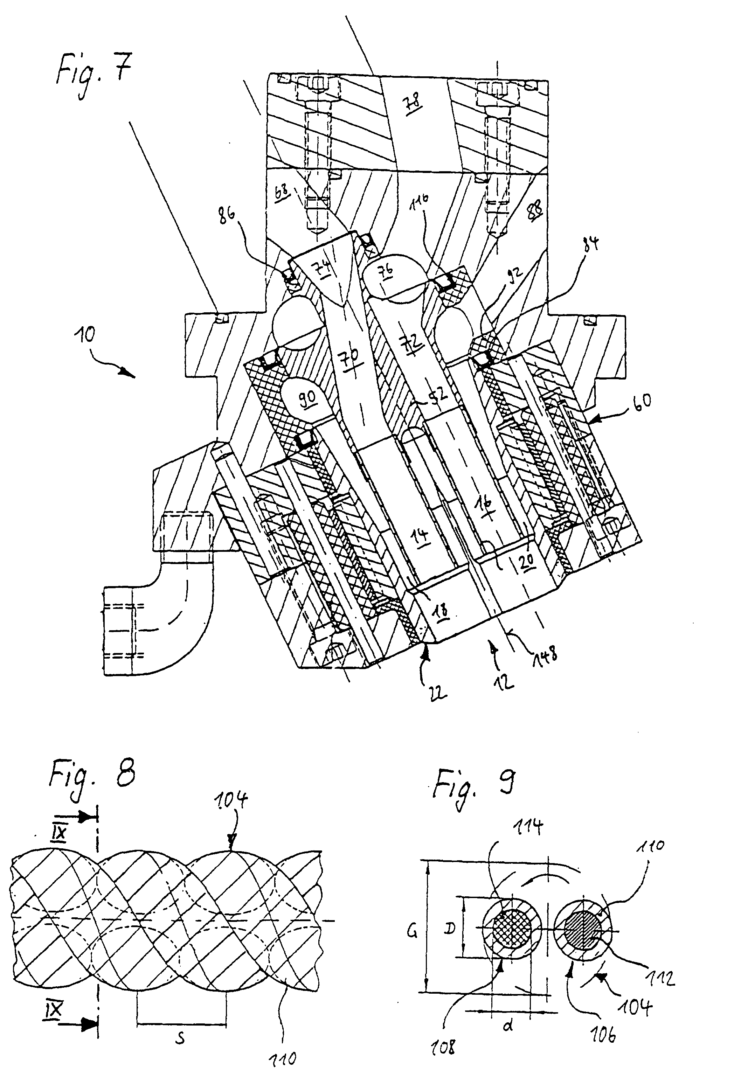

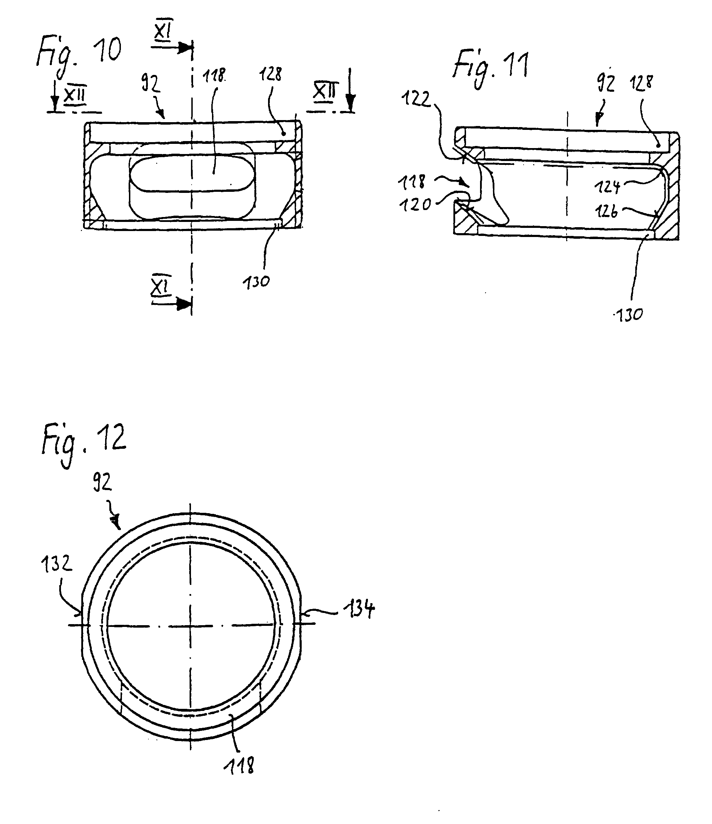

Fig. 4 und 7 stellen je eine Düsenanordnung 12 dar, bei der die zwei inneren Düsen 14 und 16 mit den umgebenden äußeren Düsen 18 bzw. 20 mit drei verschiedenen Massen beschickbar sind. Zum Zuführen der Massen sind Zuführkanäle 68, 78 und 88 vorgesehen. Der Zuführkanal 68 mündet im Einsatz 52 des Rotors 22. Der Zuführkanal 78 mündet in den Ringraum 76 und der Zuführkanal 88 in einen Ringraum 90. Der Ringraum 90 ist im äußeren Bereich durch einen im Stator 60 angeordneten Ringeinsatz 92 gebildet, der unten näher erläutert wird (Fig. 10 bis 12).

In Fig.4 ist eine Ausführungsform dargestellt, bei welcher sich der Zuführkanal 68 im Rotor 22 durch die Verbindungskanäle 70 und 72 zu den inneren Düsen 14 bzw. 16 gabelt. Der erste Ringraum 76 ist durch einen Verbindungskanal 93 mit der äußeren Düse 18 und der Ringraum 90 mit der äußeren Düse 20 verbunden. Beim Extrudieren entsteht eine Backware 91, aus zwei umeinander gewendelten Strängen 94 und 96 mit je einer gleichen Füllung 98 aus innerer Masse sowie einer ersten äußeren Masse 100 bzw. einer zweiten äußeren Masse 102 (Fig. 5 und 6).

In Fig.7 ist eine Ausführungsform dargestellt, bei welcher der Zuführkanal 68 über einen Verbindungskanal 70 mit der inneren Düse 14 und der Ringraum 76 über einen Verbindungskanal 72 mit der inneren Düse 16 verbunden ist. Der Ringraum 90 ist mit den äußeren Düsen 18 und 20 verbunden.

So entsteht beim Extrudieren eine Backware 104 mit zwei gewendelten Strängen 106 und 108, welche die gleiche Umhüllung 110 aus äußerer Masse aufweisen, jedoch zwei verschiedene Füllungen 112 und 114 aus innerer Masse. Die Größe der in den Fig. 5, 6, 8 und 9 dargestellten Backwaren 91 bzw. 104 entspricht etwa der Größe der Backware 24 in Fig.2 und 3.

Der in den Fig.4 und 7 dargestellte Rotor 22 ist zwischen dem Ringraum 76 und dem zweiten Ringraum 90 zusätzlich durch eine Dichtung 116 abgedichtet. Die Dichtung 116 dichtet sowohl den Ringraum 76 als auch den Ringraum 90 zwischen dem Einsatz 52 und dem Ringeinsatz 92 bzw. den Gehäuseteilen des Stators 60 ab.

In Fig.1, 4, 7, 17 und 20 ist ferner die Art der Anbringung des Düsenträgers 10 in einer Vorrichtung zum Extrudieren ersichtlich. Der Düsenträger 10 und damit die Achsen der Düsen 14, 16, 18 und 20 sind in einem Winkel α von etwa 25° zur Vertikalen schräg angeordnet. Die ausströmenden Massen treffen aufgrund der schrägen Anordnung der Düsen schräg auf ein abförderndes Transportband (nicht dargestellt) und die dabei entstehende Verformung der Stränge ist gering.

In den Fig. 10 bis 12 ist der Ringeinsatz 92 dargestellt. Er weist eine Einlaßöffnung 118 für aus dem Zuführkanal 88 einströmende Masse auf. Die bezogen auf die Fig. 11 untere und obere Seite der Einlaßöffnung 118 ist jeweils als schräge Einlaßfläche 120 und 122 ausgebildet. Die schrägen Einlaßflächen 120 und 122 leitet den eintretenden Massestrom nach unten. So strömt beispielsweise bei der in Fig. 7 dargestellten Ausführungsform, die äußere Masse 110, durch die Einlaßöffnung 118 in den Ringraum 90, der zwischen dem im Stator 60 eingebauten Ringeinsatz 92 und dem Einsatz 52 des Rotors 22 gebildet ist.

Die obere Ecke des Ringraums 90, also die bezogen auf die Fig. 11 axial obere, innere Ecke 124 am Ringeinsatz 92 ist abgerundet, so daß der Ringraum 90 im Längsschnitt abschnittsweise kreis- oder ellipsenförmig ist. Die axial gegenüberliegende, untere Seite 126 des Ringeinsatzes 92 ist nach unten abgeschrägt, so daß die durch die schrägen Einlaßflächen 120 und 122 eingeleitete Einströmrichtung der Masse beibehalten ist, ohne daß größere Turbulenzen auftreten.

Der Ringeinsatz 92 weist am bezogen auf die Fig. 10 und 11 oberen und unteren Ende ringförmige Absätze 128 und 130 auf, in die die Dichtungen 116 bzw. 84 einsetzbar sind. Um ein Verdrehen des im Stator 60 eingesetzten Ringeinsatzes 92 zu verhindern, weist dieser an seinem Umfang zwei Abflachungen 132 und 134 auf.

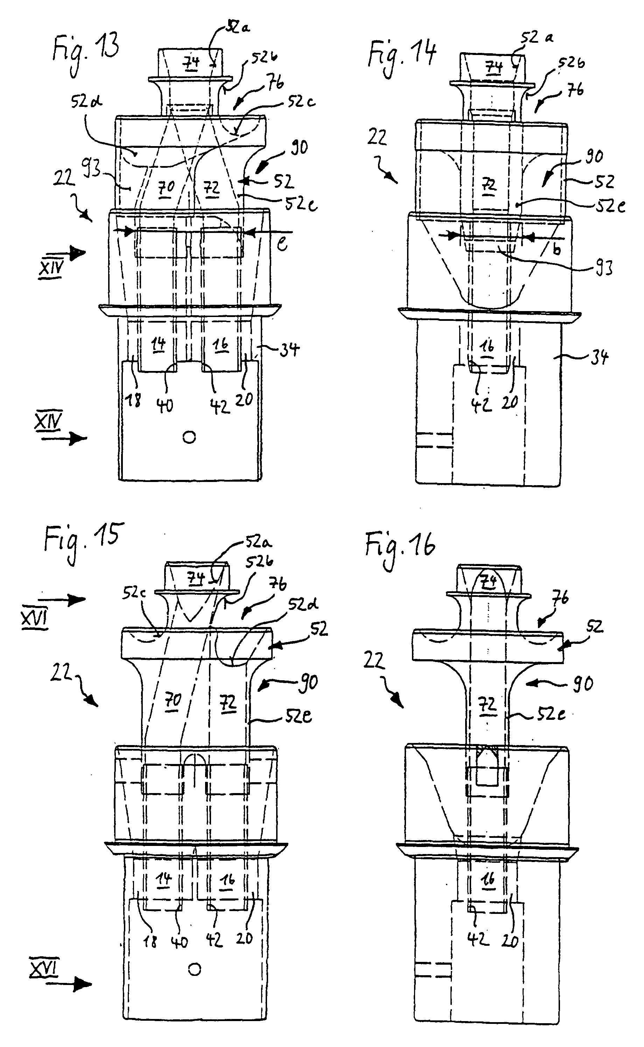

In den Fig.13 und 14 ist der Rotor 22 der in Fig.4 dargestellten Ausführungsform veranschaulicht. Der Rotor 22 umfaßt den Zylinder 34 mit den Düsen 18 und 20 und den darauf befestigten Einsatz 52. Am Einsatz 52 sind die beiden Rohrstücke 40 und 42 befestigt, die die Düsen 18 und 20 bilden.

Die Aushöhlung 74 im Einsatz 52 weist eine abgeschrägte Seitenwand 52a auf, die einen kantenlosen Übergang zum Zuführkanal 68 herstellt. Der den Ringraum 76 bildende Abschnitt des Einsatzes 52 weist gerundete Ecken 52b und 52c auf, so daß der Ringraum 76 im Längsschnitt abschnittsweise kreis- oder ellipsenförmig ausgebildet ist. Vom Ringraum 76 führt eine im Einsatz 52 ausgebildete trichterförmige Vertiefung 52d zum Verbindungskanal 93 und zur Öffnung der Düse 18. Der Verbindungskanal 93 ist selbst trichterförmig gestaltet (Fig. 14). Die Übergänge zwischen den Kanälen sind abgerundet.

Die Verbindungskanäle 70 und 72 verzweigen sich in der Zeichenebene der Fig. 13 und sind von einem Abschnitt 52e des Einsatzes 52 umgeben, der im Querschnitt abgeflacht ovalförmig ist. Der Abschnitt 52e weist eine Breite b und eine Länge l auf, wobei l größer als b, insbesondere ca. zweimal so groß wie b ist. Der abgeflachte Abschnitt 52e wirkt beim Drehen des Rotors 22 als Mitnehmer bzw. Paddel für die im Ringraum 90 befindliche Masse, so daß diese gleichmäßig im Ringraum 90 verteilt wird.

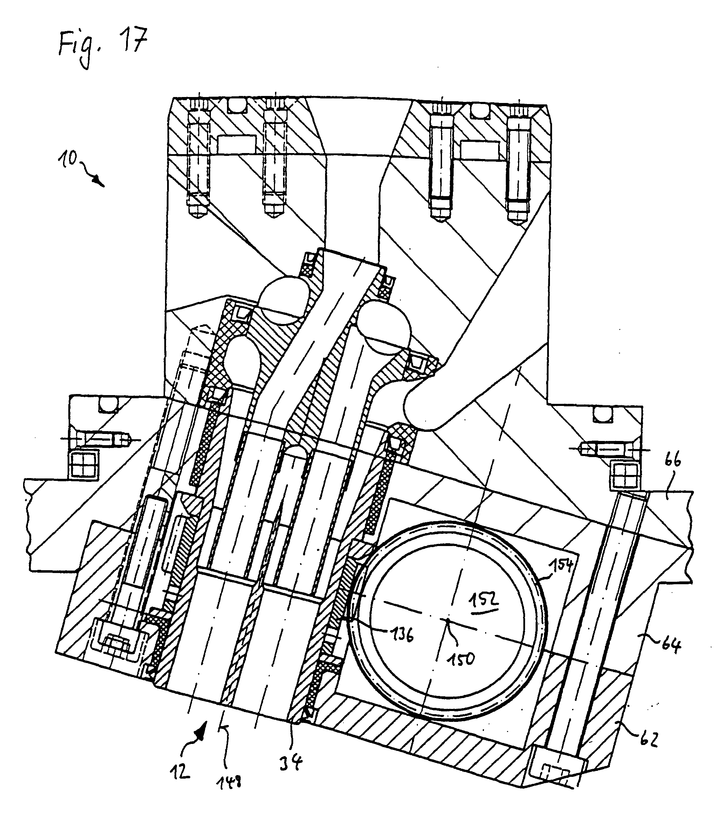

Fig. 15 und 16 zeigen den Rotor 22 der in Fig. 7 dargestellten Düsenanordnung 10. Die Verbindungskanäle 70 und 72 sind im abgeflachten Abschnitt 52e des Einsatzes 52 ausgebildet, der ebenfalls als Mitnehmer für die im Ringraum 90 befindliche Masse wirkt.

Die Fig. 1, 4, 7 zeigen eine erste Antriebsform der Düsenanordnung 10. Bei dieser Antriebsform ist am Zylinder 34 eine Außenverzahnung 136 ausgebildet, mit der ein Zahnriemen 138 in Eingriff ist. Der Zahnriemen 138 ist durch auf je einen Bolzen 140, 142 gelagerte Rollen 144, 146 abgestützt. Die Bolzen 140 und 142 sind an den Gehäuseteilen 62 und 64 befestigt. Somit ist der Rotor 22 relativ zum Stator 60 durch den Zahnriemen 138 drehbar.

In Fig. 17 ist eine zweite Antriebsform der Düsenanordnung 10 dargestellt, bei welcher der Zylinder 34 des Rotors 22 mittels eines Zahnradgetriebes mit sich kreuzenden Achsen 148 und 150 antreibbar ist. Hierzu ist in den Gehäuseteilen 62 und 64 eine Welle 152 drehbar gelagert, deren Achse 150 sich in einem Abstand zur Achse 148 des Rotors 22 und senkrecht zu dieser erstreckt. Die Welle 152 weist an ihrem der Außenverzahnung 136 gegenüberliegenden Umfang eine Verzahnung 154 auf, die mit der Außenverzahnung 136 kämmt. Beispielsweise bilden beide Verzahnungen 136 und 154 ein Schraubradpaar. Die Außenverzahnung 136 und die Verzahnung 154 können alternativ auch als Kegelradpaar oder Schneckenradsatz ausgebildet sein.

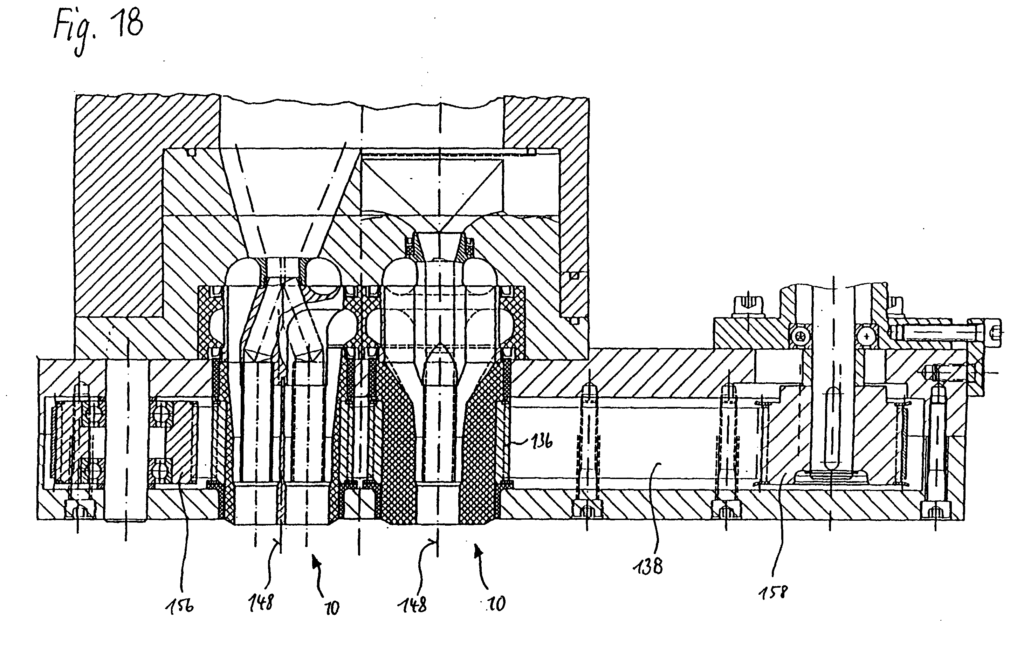

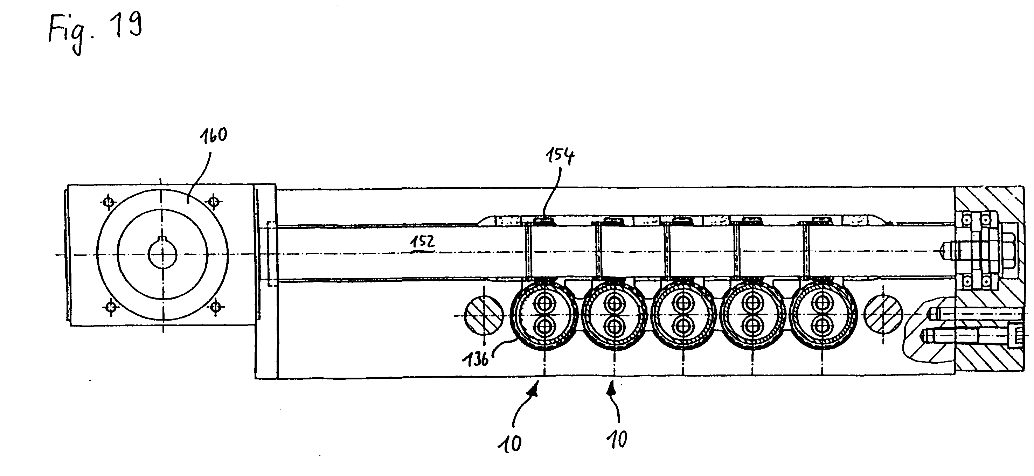

Die in Fig. 18 und 19 dargestellten Ausführungsformen sehen vor, daß mehrere Düsenanordnungen 10 nebeneinander, insbesondere unmittelbar nebeneinander, angeordnet sind. Die Achsen 148 der einzelnen Düsenanordnungen 10 sind dabei parallel zueinander angeordnet und die einzelnen Rotoren 22 mittels eines gemeinsamen Zahnriemens 138 (Fig. 18) oder einer gemeinsamen Welle 152 (Fig. 19) antreibbar.

Bei der mit einem Zahnriemen 138 getriebenen Ausführungsform (Fig.18) erstreckt sich der Zahnriemen 138 tangential zu den Rotoren 22 der Düsenträger 10. Der Zahnriemen 138 ist in üblicher und daher nicht weiter erläuterten Weise durch eine Rolle 156 umgelenkt und mittels eines Antriebsrads 158 eines Antriebmotors (nicht dargestellt) antreibbar.

Die Düsenanordnungen 10 sind bei der in Fig. 18 dargestellten, Ausführungsform um je einen Winkel von 90° um ihre Achse 148 verdreht angeordnet. Dadurch treten die Stränge nebeneinander angeordneter Düsenanordnungen 10 in einem etwas größeren Abstand voneinander aus, als dies der Fall ist, wenn die Düsenanordnungen 10 mit in ihrer Drehlage gleich ausgerichteten Düsen 18 und 20 eingebaut sind (Fig. 19). Durch den größeren Abstand ist die Gefahr geringer, daß sich die Stränge berühren und beim Backen aneinander haften. Ferner können die Düsenanordnungen 10 besonders nahe nebeneinander angeordnet werden, so daß auf einer bestimmten Breite eines Transportbandes mehr Stränge mit Backwaren angeordnet werden können als bisher.

Bei der mit der Welle 152 getriebenen Ausführungsform (Fig.19) erstreckt sich die Welle 152 an den nebeneinander angeordneten Düsenanordnungen 10 vorbei. Dabei weist die Welle 152 jeweils gegenüber den Außenverzahnungen 136 entsprechende einzelne Verzahnungen 154 auf oder es ist eine längs der Welle 152 durchgehende Verzahnung auf dieser ausgebildet. Die Welle 152 kann in üblicher und daher nicht weiter erläuterten Weise, etwa durch ein Kreuzgelenk, umgelenkt sein und ist mittels eines Antriebmotors 160 antreibbar, so daß sich beim Extrudieren die Düsenanordnungen 10 synchron zueinander drehen.

Durch die synchrone Drehung der Düsenanordnungen 10 entstehen beim Extrudieren mehrere gleichartig gewendelte Stränge von Backwaren, beispeilsweise bis zu dreißig Stränge gleichzeitig.

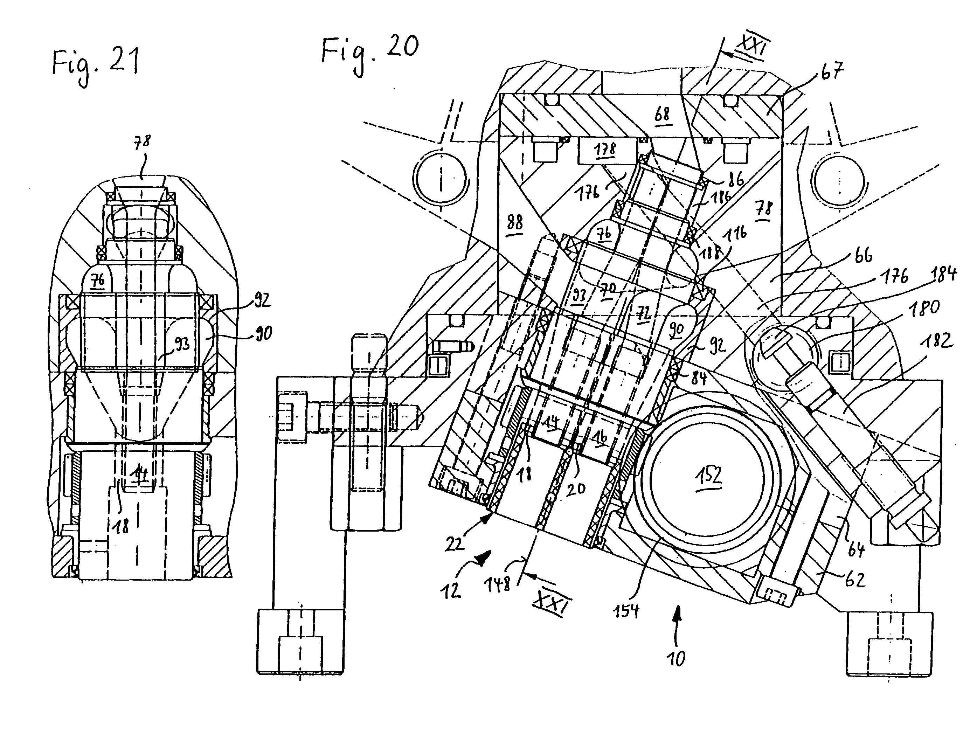

In Fig.20, 21, 24 und 25 ist eine Ausführungsform einer Düsenanordnung 10 dargestellt, mittels der eine Backware 162 mit zwei Strängen 164 und 166 herstellbar ist, wobei jeder Strang 164 bzw. 166 je eine unterschiedliche Füllung 168 und 170 aus innerer Masse und eine unterschiedliche Umhüllung 172 und 174 aus äußerer Masse aufweist. Hierzu ist bei der Düsenanordnung 10 der Zuführkanal 68 über den Verbindungskanal 72 mit der inneren Düse 16, der Zuführkanal 78 durch den Ringraum 76 und den Verbindungskanal 93 mit der äußeren Düse 18 und der Zuführkanal 88 durch den Ringraum 90 mit der äußeren Düse 20 verbunden. Die Gestaltung der Zuführkanäle 68, 78 und 88, der Verbindungskanäle 72 und 93 und der Ringräume 76 und 90 ist dabei analog zu den in Fig. 4, 7, 17 dagestellten Ausführungsformen gestaltet. Durch die gleichartige Gestaltung ist es möglich, durch einfachen Austausch der Düsenanordnung 10, mit einer einzigen Vorrichtung stark unterschiedliche Backwaren herzustellen.

Die in Fig. 20 dargestellte Düsenanordnung 10 weist darüber hinaus einen vierten Zuführkanal 176 auf, der zusammen mit einem Puffervolumen 178 im Gehäuseteil 66 ausgebildet ist. Zum Zuführkanal 178 führt ein Querkanal 180, der sich senkrecht zur Zeichenebene der Fig. 20 erstreckt. Am Querkanal 180 ist für jede Düsenanordnung 10 je eine verstellbare Dosiereinrichtung 182 angeordnet, die durch ein Ventil 184 die Verbindung zwischen Querkanal 180 und Zuführkanal 178 zu drosseln bzw. zu verschließen vermag. An der Düsenanordnung 10 ist an mindestens einem der Kanäle ein Drucksensor (nicht dargestellt) angeordnet, der den im entsprechenden Kanal bestehenden Druck ermittelt und als elektrisches Signal einer Steuerung meldet. Mit Hilfe der Steuerung und der Dosiereinrichtung 182 wird der Druck der Masse im Zuführkanal 178 an den Druck der Masse bzw. Massen in den anderen Kanälen der Düsenanordnung angepaßt. Somit ist es möglich der Düsenanordnung 10 eine vierte Masse zuzuführen und dennoch eine hohe Genauigkeit von Gewicht und Maß der extrudierten Backware 162 zu erhalten.

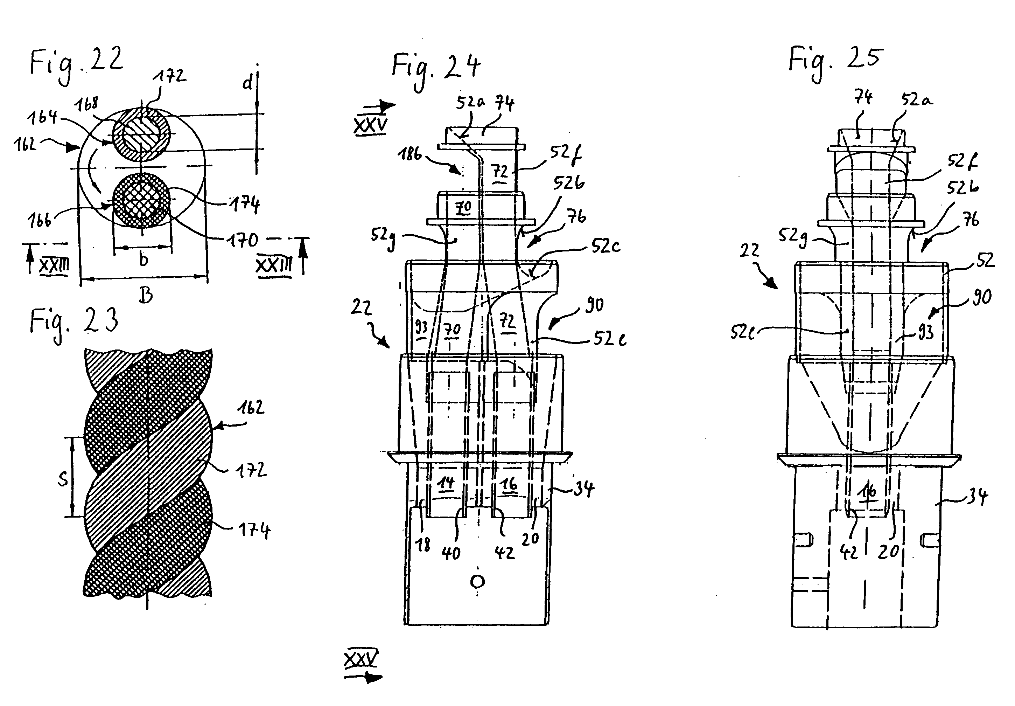

Bei der in den Fig.20 und 21 dargestellten Düsenanordnung 10 ist zwischen dem Zuführkanal 68 und dem Ringraum 76 ein weiterer Ringraum 186 ausgebildet, der mittels einer Dichtung 188 zum Ringraum 76 abgedichtet ist. Der Ringraum 186 steht in Verbindung mit dem Zuführkanal 176 und mit dem Verbindungskanal 70, der im Einsatz 52 analog zu der in Fig.7 dargestellten Ausführungsform ausgebildet ist. Der Verbindungskanal 70 führt zur inneren Düse 14.

In den Fig. 24 und 25 ist der Rotor 22 der in Fig. 20 dargestellten Düsenanordnung 10 veranschaulicht. Der Rotor 22 ist im Bereich der Ringräume 76 und 90 im wesentlichen gleich dem in Fig. 13 und 14 dargestellten Rotor 22 gestaltet. Bei dem in Fig. 24 und 25 dargestellten Rotor 22 sind die Verbindungskanäle 70 und 72 jedoch nebeneinander geführt und vereinigen sich nicht. Der Verbindungskanal 72 ist durch die Aushöhlung 74 mit dem Zuführkanal 68 verbunden, wobei durch die schräge Seitenwand 52a ein glatten Übergang gestaltet ist.

Der Ringraum 186 liegt unmittelbar unter der Aushöhlung 74, wobei ein Abschnitt 52f des Einsatzes 52, der den Verbindungskanal 72 umgibt, sich im mittleren Bereich des Ringraums 186 erstreckt. Der Abschnitt 52f ist dabei exzentrisch angeordnet, so daß er beim Drehen des Rotors 22 die im Ringraum 186 befindliche Masse fördert und gleichmäßig verteilt.

Unter dem Ringraum 186 ist der Ringraum 76 ausgebildet, dessen mittlerer Bereich von einem Abschnitt 52g des Einsatzes 52 gebildet ist. Dieser Abschnitt 52g kann im Querschnitt kreisförmig ausgebildet sein (wie in Fig. 24 und 25 dargestellt) oder eine abgeflachte, ovale Form aufweisen, so daß dieser Abschnitt 52g beim Drehen des Rotors 22 die im Ringraum 76 befindliche Masse fördert und verteilt.

## Patentansprüche

1. Düsenanordnung (12) zum Extrudieren teigiger Massen, mit
- zwei inneren Düsen (14, 16) zum Extrudieren mindestens einer inneren Masse (26; 98; 112, 114; 168, 170), und
- zwei äußeren Düsen (18, 20) zum Extrudieren mindestens einer äußeren Masse (28; 100, 102; 110; 172, 174), wobei
- die äußeren Düsen (18, 20) je eine innere Düse (14, 16) in einem Abstand umgeben, und alle Düsen (14, 16, 18, 20) um eine gemeinsame Drehachse (148) drehbar sind, und
- die inneren Düsen (14, 16) je eine Mündung (44, 46) und die äußeren Düsen (18, 20) je eine Mündung (36, 38) aufweisen,
**dadurch gekennzeichnet, daß**
die Mündungen (36, 38) der äußeren Düsen (18, 20) in Strömungsrichtung hinter den Mündungen (44, 46) der inneren Düsen (14, 16) angeordnet sind.

2. Düsenanordnung nach Anspruch 1,
**dadurch gekennzeichnet, daß** die äußeren Düsen (18, 20) auf Höhe der Mündungen (44, 46) der inneren Düsen (14, 16) in Strömungsrichtung der Massen verengt sind.

3. Düsenträger (10) zum Extrudieren teigiger Massen,
**dadurch gekennzeichnet, daß** er aufweist:
eine Düsenanordnung (12) nach Anspruch 1 oder 2, einen Stator (60), in dem ein erster (68) und zweiter Zuführkanal (78) ausgebildet sind, sowie einen Rotor (22), der die Düsen (14, 16, 18, 20) trägt, im Stator (60) drehbar gelagert ist und zwei Verbindungskanäle (70, 72) enthält, die den ersten Zuführkanal (68) mit je einer inneren Düse (14, 16) verbinden, wobei zwischen Stator (60) und Rotor (22) ein Ringraum (76) ausgebildet ist, der den zweiten Zuführkanal (78) mit den äußeren Düsen (18, 20) verbindet (Fig. 1).

4. Düsenträger nach Anspruch 3,
**dadurch gekennzeichnet, daß** der Rotor (22) gegenüber dem Stator (60) durch eine erste (86) und eine zweite Dichtung (84) abgedichtet ist, wobei die erste Dichtung (86) den ersten Zuführkanal (68) abdichtet und die erste (86) sowie die zweite Dichtung (84) den Ringraum (76) abdichten.

5. Düsenträger (10) zum Extrudieren teigiger Massen,
**dadurch gekennzeichnet, daß** er aufweist:
eine Düsenanordnung (12) nach Anspruch 1 oder 2, einen Stator (60), in dem ein erster (68), zweiter (78) und dritter Zuführkanal (88) ausgebildet sind, sowie einen Rotor (22), der die Düsen (14, 16, 18, 20) trägt, im Stator (60) drehbar gelagert ist und zwei Verbindungskanäle (70, 72) enthält, die den ersten Zuführkanal (68) mit je einer inneren Düse (14, 16) verbinden, wobei zwischen dem Stator (60) und dem Rotor (22) ein erster Ringraum (76) ausgebildet ist, der den zweiten Zuführkanal (78) mit einer ersten äußeren Düse (18) verbindet, und ein zweiter Ringraum (90) ausgebildet ist, der
den dritten Zuführkanal (88) mit der zweiten äußeren Düse (20) verbindet (Fig. 4).

6. Düsenträger (10) zum Extrudieren teigiger Massen,
**dadurch gekennzeichnet, daß** er aufweist:
eine Düsenanordnung (12) nach Anspruch 1 oder 2, einen Stator (60), in dem ein erster (68), zweiter (78) und dritter Zuführkanal (88) ausgebildet sind, und einen Rotor (22), der die Düsen (14, 16, 18, 20) trägt, im Stator (60) drehbar gelagert ist und einen ersten Verbindungskanal (70) enthält, der den ersten Zuführkanal (68) mit der ersten inneren Düse (14) verbindet, wobei zwischen dem Stator (60) und dem Rotor (22) ein erster Ringraum (76) und im Rotor (22) ein zweiter Verbindungskanal (72) ausgebildet sind, die den zweiten Zuführkanal (78) mit der zweiten inneren Düse (16) verbinden, und zwischen dem Stator (60) sowie dem Rotor (22) ein zweiter Ringraum (90) ausgebildet ist, der den dritten Zuführkanal (88) mit den äußeren Düsen (18, 20) verbindet (Fig. 7).

7. Düsenträger nach einem der Ansprüche 5 oder 6,
**dadurch gekennzeichnet, daß** zwischen dem Rotor (22) und dem Stator (60) eine erste (86), zweite (116) und dritte Dichtung (84) angeordnet sind, wobei die erste Dichtung (86) den ersten Verbindungskanal (70) abdichtet, die erste (86) und zweite Dichtung (116) den ersten Ringraum (76) abdichten, und die zweite (116) und dritte Dichtung (84) den zweiten Ringraum (90) abdichten.

8. Düsenträger zum Extrudieren teigiger Massen,
**dadurch gekennzeichnet, daß** er aufweist:
eine Düsenanordnung (12) nach Anspruch 1 oder 2, einen Stator (60), in dem ein erster (68), zweiter (78), dritter (88) und
vierter Zuführkanal (176) ausgebildet sind, und einen Rotor (22), der die Düsen (14, 16, 18, 20) trägt, im Stator (60) drehbar gelagert ist und einen ersten Verbindungskanal (72) enthält, der den ersten Zuführkanal (68) mit der zweiten inneren Düse (16) verbindet, wobei zwischen dem Stator (60) und dem Rotor (22) ein erster Ringraum (76) und im Rotor (22) ein zweiter Verbindungskanal (93) ausgebildet sind, die den zweiten Zuführkanal (78) mit einer ersten äußeren Düse (18) verbinden, zwischen dem Stator (60) und dem Rotor (22) ein zweiter Ringraum (90) ausgebildet ist, der den dritten Zuführkanal (88) mit der zweiten äußeren Düse (20) verbindet, und zwischen dem Stator (60) sowie dem Rotor (22) ein dritter Ringraum (186), und im Rotor (22) ein dritter Verbindungskanal (70) ausgebildet sind, die den vierten Zuführkanal (176) mit der ersten inneren Düse (14) verbinden (Fig. 20).

9. Düsenträger nach Anspruch 8,
**dadurch gekennzeichnet, daß** zwischen dem Rotor (22) und dem Stator (60) eine erste (86), zweite (188), dritte (116) und vierte Dichtung (84) angeordnet sind, wobei die erste Dichtung (86) den ersten Zuführkanal (68) abdichtet, die erste (86) und zweite Dichtung (188) den dritten Ringraum (186) abdichten, und die zweite (188) und dritte Dichtung (116) den ersten Ringraum (76) abdichten, und die dritte (116) und vierte Dichtung (84) den dritten Ringraum (90) abdichten.

10. Düsenträger nach einem der Ansprüche 3 bis 9,
**dadurch gekennzeichnet, daß** die Drehachse (148) des Rotors (22) die Mittelachse der Düsen (14, 16, 18, 20) ist.

11. Düsenträger nach einem der Ansprüche 3 bis 10,
**dadurch gekennzeichnet, daß** mindestens einer der Ringräume (76, 90) im Längsschnitt abschnittsweise kreis- oder ellipsenförmig ist.

12. Düsenträger nach einem der Ansprüche 3 bis 11,
**dadurch gekennzeichnet, daß** der Rotor (22) im Bereich mindestens eines Ringraums (90) derart ausgebildet ist (52e), daß er beim Drehen im Ringraum (90) enthatene Masse mitfördert.

13. Düsenträger nach einem der Ansprüche 3 bis 12,
**dadurch gekennzeichnet, daß** der Rotor (22) im Bereich mindestens eines Ringraums (90) im Querschnitt abgeflacht oval ausgestaltet ist (52e).

14. Vorrichtung zum Extrudieren teigiger Massen,
**dadurch gekennzeichnet, daß** wenigstens ein Düsenträger (10) nach einem der Ansprüche 3 bis 13 vorgesehen ist, und der Rotor (22) durch ein Zugmittelgetriebe, insbesondere ein Zahnriementrieb (136, 138), oder ein Zahnradgetriebe (136, 152, 154) mit sich kreuzenden Achsen (148, 150) antreibbar ist.

15. Vorrichtung nach Anspruch 14,
**dadurch gekennzeichnet, daß** mehrere Düsenträger (10) nebeneinander angeordnet und durch ein einziges Zugmittelgetriebe, insbesondere einen Zahnriementrieb (136, 138), oder ein einziges Zahnradgetriebe (136, 152, 154) mit sich kreuzenden Achsen (148, 150) antreibbar sind.

16. Vorrichtung nach Anspruch 14 oder 15,
**dadurch gekennzeichnet, daß** jeder Düsenträger (10) in einem Winkel α von etwa 25° zur Vertikalen geneigt angeordnet ist.

## Claims

1. Nozzle arrangement (12) for extruding doughy substances, comprising
- two inner nozzles (14, 16) for extruding at least one inner substance (26; 98; 112, 114; 168, 170), and
- two outer nozzles (18, 20) for extruding at least one outer substance (28; 100, 102; 110; 172, 174), wherein
- the outer nozzles (18, 20) each surround an inner nozzle (14, 16) with clearance, and all of the nozzles (14, 16, 18, 20) are rotatable about a common axis of rotation (148), and
- the inner nozzles (14, 16) each have a mouth (44, 46) and the outer nozzles (18, 20) each have a mouth (36, 38),
**characterized in that**
the mouths (36, 38) of the outer nozzles (18, 20) are disposed in flow direction downstream of the mouths (44, 46) of the inner nozzles (14, 16).

2. Nozzle arrangement according to claim 1,
**characterized in that** at the level of the mouths (44, 46) of the inner nozzles (14, 16) the outer nozzles (18, 20) are narrowed in the direction of flow of the substances.

3. Nozzle carrier (10) for extruding doughy substances,
**characterized in that** it comprises:
a nozzle arrangement (12) according to claim 1 or 2, a stator (60), in which a first (68) and a second feed channel (78) are formed, as well as a rotor (22) which carries the nozzles (14, 16, 18, 20), is rotatably supported in the stator (60) and
contains two connection channels (70, 72) connecting the first feed channel (68) in each case to an inner nozzle (14, 16), wherein between stator (60) and rotor (22) an annular space (76) is formed connecting the second feed channel (78) to the outer nozzles (18, 20) (Fig. 1).

4. Nozzle carrier according to claim 3,
**characterized in that** the rotor (22) is sealed relative to the stator (60) by means of a first (86) and a second seal (84), wherein the first seal (86) seals off the first feed channel (68) and the first (86) and the second seal (84) seal off the annular space (76).

5. Nozzle carrier (10) for extruding doughy substances,
**characterized in that** it comprises a nozzle arrangement (12) according to claim 1 or 2, a stator (60), in which a first (68), second (78) and third feed channel (88) are formed, as well as a rotor (22) which carries the nozzles (14, 16, 18, 20), is rotatably supported in the stator (60) and contains two connection channels (70, 72) that connect the first feed channel (68) in each case to an inner nozzle (14, 16), wherein between the stator (60) and the rotor (22) a first annular space (76) is formed connecting the second feed channel (78) to a first outer nozzle (18), and a second annular space (90) is formed, which connects the third feed channel (88) to the second outer nozzle (20) (Fig. 4).

6. Nozzle carrier (10) for extruding doughy substances,
**characterized in that** it comprises:
a nozzle arrangement (12) according to claim 1 or 2, a stator (60), in which a first (68), second (78) and third feed channel (88) are formed, and a rotor (22) which carries the nozzles (14, 16, 18, 20), is rotatably supported in the stator (60) and
contains a first connection channel (70) that connects the first feed channel (68) to the first inner nozzle (14), wherein between the stator (60) and the rotor (22) a first annular space (76) and in the rotor (22) a second connection channel (72) are formed connecting the second feed channel (78) to the second inner nozzle (16), and between the stator (60) and the rotor (22) a second annular space (90) is formed connecting the third feed channel (88) to the outer nozzles (18, 20) (Fig. 7).

7. Nozzle carrier according to one of claims 5 or 6,
**characterized in that** between the rotor (22) and the stator (60) a first (86), second (116) and third seal (84) are disposed, wherein the first seal (86) seals off the first connection channel (70), the first (86) and the second seal (116) seal off the first annular space (76), and the second (116) and the third seal (84) seal off the second annular space (90).

8. Nozzle carrier for extruding doughy substances,
**characterized in that** it comprises:
a nozzle arrangement (12) according to claim 1 or 2, a stator (60), in which a first (68), second (78), third (88) and fourth feed channel (176) are formed, and a rotor (22) which carries the nozzles (14, 16, 18, 20), is rotatably supported in the stator (60) and contains a first connection channel (72) that connects the first feed channel (68) to the second inner nozzle (16), wherein between the stator (60) and the rotor (22) a first annular space (76) and in the rotor (22) a second connection channel (93) are formed connecting the second feed channel (78) to a first outer nozzle (18), between the stator (60) and the rotor (22) a second annular space (90) is formed connecting the third feed channel (88) to the second outer nozzle (20), and between the stator (60) and the rotor (22) a third annular space (186) and in the rotor (22) a third connection channel (70) are formed connecting the fourth feed channel (176) to the first inner nozzle (14) (Fig. 20).

9. Nozzle carrier according to claim 8,
**characterized in that** between the rotor (22) and the stator (60) a first (86), second (188), third (116) and fourth seal (84) are disposed, wherein the first seal (86) seals off the first feed channel (68), the first (86) and the second seal (188) seal off the third annular space (186), and the second (188) and the third seal (116) seal off the first annular space (76), and the third (116) and the fourth seal (84) seal off the third annular space (90).

10. Nozzle carrier according to one of claims 3 to 9,
**characterized in that** the axis of rotation (148) of the rotor (22) is the centre line of the nozzles (14, 16, 18, 20).

11. Nozzle carrier according to one of claims 3 to 10,
**characterized in that** in longitudinal section at least one of the annular spaces (76, 90) is in sections circular or elliptical in shape.

12. Nozzle carrier according to one of claims 3 to 11,
**characterized in that** in the region of at least one annular space (90) the rotor (22) is designed (52e) in such a way that, as it rotates, it simultaneously conveys substance contained in the annular space (90).

13. Nozzle carrier according to one of claims 3 to 12,
**characterized in that** in the region of at least one annular space (90) the rotor (22) is in cross section of a flattened oval design (52e).

14. Device for extruding doughy substances,
**characterized in that** at least one nozzle carrier (10) according to one of claims 3 to 13 is provided, and the rotor (22) is adapted to be driven by means of a traction mechanism gearing, in particular a toothed belt drive (136, 138), or a toothed gearing (136, 152, 154) with intersecting axes (148, 150).

15. Device according to claim 14,
**characterized in that** a plurality of nozzle carriers (10) are disposed side by side and are adapted to be driven by means of a single traction mechanism gearing, in particular a toothed belt drive (136, 138), or a single toothed gearing (136, 152, 154) with intersecting axes (148, 150).

16. Device according to claim 14 or 15,
**characterized in that** each nozzle carrier (10) is disposed so as to be inclined at an angle α of about 25° to the vertical.

## Revendications

1. Ensemble à filière (12) pour extruder des matières sous forme de pâte, comportant
- deux filières intérieures (14, 16) pour extruder au moins une pâte intérieure (26 ; 98 ; 112, 114 ; 168, 170), et
- deux filières extérieures (18, 20) pour extruder au moins une pâte extérieure (28 ; 100, 102 ; 110 ; 172, 174),
- les filières extérieures (18, 20) entourant chacune à distance une filière intérieure (14, 16), et toutes les filières (14, 16, 18, 20) étant mobiles en rotation autour d'un axe de rotation commun (148), et
- les filières intérieures (14, 16) présentant chacune une embouchure (44, 46) et les filières extérieures (18, 20) présentant chacune une embouchure (36, 38),
**caractérisé en ce que** les embouchures (36, 38) des filières extérieures (18, 20) sont agencées, en direction d'écoulement, derrière les embouchures (44, 46) des filières intérieures (14, 16).

2. Ensemble à filière selon la revendication 1, **caractérisé en ce que** les filières extérieures (18, 20) sont rétrécies en direction d'écoulement des pâtes à la hauteur des embouchures (44, 46) des filières intérieures (14, 16).

3. Porte-filière (10) pour extruder des matières sous forme de pâte, **caractérisé en ce qu'**il comprend un ensemble filière (12) selon la revendication 1 ou 2, un stator (60) dans lequel sont réalisés un premier canal d'amenée (68) et un deuxième canal d'amenée (78), ainsi qu'un rotor (22) qui porte les filières (14, 16, 18, 20), est monté mobile en rotation dans le stator (60) et contient deux canaux de liaison (70, 72) qui relient le premier canal d'amenée (68) à une filière intérieure respective (14, 16), une chambre annulaire (76) étant formée entre le stator (60) et le rotor (22), laquelle relie le deuxième canal d'amenée (78) aux deux filières extérieures (18, 20) (figure 1).

4. Porte-filière selon la revendication 3, **caractérisé en ce que** le rotor (22) est étanché par rapport au stator (60) par un premier joint (86) et par un deuxième joint (84), le premier joint (86) étanchant le premier canal d'amenée (68) et le premier joint (86) ainsi que le deuxième joint (84) étanchant la chambre annulaire (76).

5. Porte-filière (10) pour extruder des matières sous forme de pâte, **caractérisé en ce qu'**il comprend un ensemble filière (12) selon la revendication 1 ou 2, un stator (60) dans lequel sont réalisés un premier canal d'amenée (68), un deuxième canal d'amenée (78) et un troisième canal d'amenée (88), ainsi qu'un rotor (22) qui porte les filières (14, 16, 18, 20), est monté mobile en rotation dans le stator (60) et contient deux canaux de liaison (70, 72) qui relient le premier canal d'amenée (68) à une filière intérieure respective (14, 16), une première chambre annulaire (76) étant formée entre le stator (60) et le rotor (22), laquelle relie le deuxième canal d'amenée (78) à une première filière extérieure (18), et une deuxième chambre annulaire (90) étant formée qui relie le troisième canal d'amenée (88) à la deuxième filière extérieure (20) (figure 4).

6. Porte-filière (10) pour extruder des matières sous forme de pâte, **caractérisé en ce qu'**il comprend un ensemble filière (12) selon la revendication 1 ou 2, un stator (60) dans lequel sont réalisés un premier canal d'amenée (68), un deuxième canal d'amenée (78) et un troisième canal d'amenée (88), et un rotor (22) qui porte les filières (14, 16, 18, 20), est monté mobile en rotation dans le stator (60) et contient un premier canal de liaison (70) qui relie le premier canal d'amenée (68) à la première filière intérieure (14), une première chambre annulaire (76) étant formée entre le stator (60) et le rotor (22) et un deuxième canal d'amenée (72) étant réalisé dans le rotor (22) qui relient le deuxième canal d'amenée (78) à la deuxième filière intérieure (16), et une deuxième chambre annulaire (90) étant formée entre le stator (60) et le rotor (22), laquelle relie le troisième canal d'amenée (88) aux filières extérieures (18, 20) (figure 7).

7. Porte-filière selon l'une des revendications 5 et 6, **caractérisé en ce qu'**un premier joint (86), un deuxième joint (116) et un troisième joint (84) sont agencés entre le rotor (22) et le stator (60), le premier joint (86) étanchant le premier canal de liaison (70), le premier joint (86) et le deuxième joint (116) étanchant la première chambre annulaire (76) et le deuxième joint (116) et le troisième joint (84) étanchant la deuxième chambre annulaire (90).

8. Porte-filière pour extruder des matières sous forme de pâte, **caractérisé en ce qu'**il comprend un ensemble filière (12) selon la revendication 1 ou 2, un stator (60) dans lequel sont réalisés un premier canal d'amenée (68), un deuxième canal d'amenée (78), un troisième canal d'amenée (88) et un quatrième canal d'amenée (176), et un rotor (22) qui porte les filières (14, 16, 18, 20), est monté mobile en rotation dans le stator (60) et contient un premier canal de liaison (72) qui relie le premier canal d'amenée (68) à la deuxième filière intérieure (16), une première chambre annulaire (76) étant formée entre le stator (60) et le rotor (22) et un deuxième canal de liaison (93) étant réalisé dans le rotor (22) qui relient le deuxième canal d'amenée (78) à une première filière extérieure (18), une deuxième chambre annulaire (90) étant formée entre le stator (60) et le rotor (22), laquelle relie le troisième canal d'amenée (88) à la deuxième filière extérieure (20), et une troisième chambre annulaire (186) étant formée entre le stator (60) et le rotor (22) et un troisième canal de liaison (70) étant réalisé dans le rotor (22) qui relient le quatrième canal d'amenée (176) à la première filière intérieure (14) (figure 20).

9. Porte-filière selon la revendication 8, **caractérisé en ce qu'**un premier joint (86), un deuxième joint (188), un troisième joint (116) et un quatrième joint (84) sont agencés entre le rotor (22) et le stator (60), le premier joint (86) étanchant le premier canal de liaison (68), le premier joint (86) et le deuxième joint (188) étanchant la troisième chambre annulaire (186), et le deuxième joint (188) et le troisième joint (116) étanchant la première chambre annulaire (76), et le troisième joint (116) et le quatrième joint (84) étanchant la troisième chambre annulaire (90).

10. Porte-filière selon l'une des revendications 3 à 9, **caractérisé en ce que** l'axe de rotation (148) du rotor (22) est l'axe médian des filières (14, 16, 18, 20).

11. Porte-filière selon l'une des revendications 3 à 10, **caractérisé en ce qu'**au moins une des chambres annulaires (76, 90) présente en section longitudinale localement une forme circulaire ou elliptique.

12. Porte-filière selon l'une des revendications 3 à 11, **caractérisé en ce que** le rotor (22) est réalisé dans la zone de la au moins une chambre annulaire (90) de telle sorte (52e) que lors de la rotation il entraîne avec lui la pâte contenue dans la chambre annulaire (90).

13. Porte-filière selon l'une des revendications 3 à 12, **caractérisé en ce que** dans la zone de la au moins une chambre annulaire (90) le rotor (22) est réalisé sous forme ovale aplatie en section transversale.

14. Dispositif pour extruder des matières en forme de pâte, **caractérisé en ce qu'**il est prévu au moins un porte-filière (10) selon l'une des revendications 3 à 13, et **en ce que** le rotor (22) est susceptible d'être entraîné par une transmission à organe de traction, en particulier par un entraînement à courroie dentée (136, 138) ou par une transmission à engrenages (136, 152, 154) dont les axes (148, 150) se croisent.

15. Dispositif selon la revendication 14, **caractérisé en ce que** plusieurs porte-filière (10) sont agencés les uns à côté des autres et sont susceptibles d'être entraînés par une seule transmission à organe de traction, en particulier par un entraînement à courroie dentée (136, 138), ou par une seule transmission à engrenages (136, 152, 154) dont les axes (148, 150) se croisent.

16. Dispositif selon la revendication 14 ou 15, **caractérisé en ce que** chaque porte-filière (10) est agencé en étant incliné sous un angle α d'environ 25° par rapport à la verticale.
